# FASCICULE DE BREVET EUROPEEN

(11) **EP 2 754 675 B1**
(45) Date de publication et mention de la délivrance du brevet: **10.06.2015**
(21) Numéro de dépôt: 13189507.0
(22) Date de dépôt: 21.10.2013
(51) Int. Cl.: C08F 2/20, C08F 220/56, C08F 220/06, C08F 220/34

(54) **PROCÉDE DE PRÉPARATION DE DISPERSION AQUEUSE DE POLYMÈRE SOUS VIDE, ET LEURS APPLICATIONS**
HERSTELLUNGSVERFAHREN EINER WÄSSRIGEN POLYMERDISPERSION UNTER VAKUUM, UND IHRE ANWENDUNGEN
METHOD FOR PREPARING AN AQUEOUS DISPERSION OF POLYMER IN A VACUUM, AND USES THEREOF

(30) Priorité: 09.01.2013 FR 1350180
(43) Date de publication de la demande: 16.07.2014
(73) Titulaire: S.P.C.M. SA, 42160 Andrézieux Bouthéon (FR)
(72) Inventeur: Coccolo, Sébastien, 69003 LYON (FR); Tavernier, Bruno, 42170 SAINT JUST SAINT RAMBERT (FR)
(74) Mandataire: Cabinet Laurent & Charras

(56) Documents cités:
- FR-A1- 2 240 242
- FR-A1- 2 620 717
- FR-A5- 2 065 077

## Description

L'invention concerne des dispersions aqueuses de polymères hydrophiles. Ces dispersions sont obtenues par polymérisation dans une solution aqueuse d'un mélange de monomères en présence d'un sel et/ou d'un polymère appelé stabilisant. Elles sont aussi appelées dispersion eau dans eau.

Les polymères hydrophiles sont connus pour remplir de très nombreuses fonctions, dont les plus importantes sont celles de floculant, de coagulant, de stabilisant, d'épaississant et d'agent de flottation. Ils sont utilisés sous différentes formes et dans divers secteurs industriels tels que le traitement des eaux (urbaines, industrielles, résiduaires), la fabrication de feuilles de papier et carton, l'industrie du pétrole (forage, récupération assistée ou EOR), le traitement des minerais et de divers minéraux comme les charges et pigments.

La technique de polymérisation conduisant à des dispersions aqueuses de polymères hydrophiles a été développée depuis de nombreuses années.

Cette technique consiste à effectuer la polymérisation d'un monomère ou d'un mélange de monomères dans de l'eau contenant un sel et/ou d'autres agents chimiques comme des dispersants en solution ou en dispersion. Le polymère hydrophile formé durant la polymérisation n'étant pas soluble dans le milieu salin et/ou contenant des dispersants, il précipite lorsqu'il atteint un poids moléculaire suffisamment élevé. A la fin de la polymérisation, on obtient une dispersion liquide de particules de polymère en suspension dans le mélange aqueux.

Cette technique permet de solubiliser très rapidement (quelques secondes) le polymère dans l'eau lors de son utilisation.
Dow Chemical dans le brevet US 3,658,772, décrit des dispersions obtenues par copolymérisation d'acide acrylique et d'un autre monomère dans une solution aqueuse renfermant des sels inorganiques. La dispersion obtenue se caractérise par un pH fortement acide. Le temps de polymérisation est compris entre 16 et 22 heures.

Depuis, de nombreux autres brevets ont été déposés. Le brevet Hymo US 4,929, 655 décrit un procédé de préparation de dispersion aqueuse de polymère hydrophile dans une solution saline aqueuse en présence d'un dispersant. Le temps de réaction est de 10 heures.

Le brevet US 5,605,970 reprend le procédé Hymo en incorporant à la dispersion un monomère hydrophobe. Les temps de polymérisation sont compris entre 18 et 24 heures.

Le brevet EP 1 040 141 propose également un procédé de préparation de dispersions aqueuses pour lesquels les temps de polymérisation sont compris entre 10 et 20 heures.

Une des problématiques de tous ces procédés de l'art antérieur est le temps très long de préparation, compris entre 6 et 24 heures. Cette limite technologique s'explique par la nécessité de réaliser la polymérisation à des températures raisonnables généralement comprises entre 10 et 80°C, le plus souvent comprises entre 20 et 60°C, ou plus précisément entre 30 et 50°C environ. A défaut, la viscosité du milieu de réaction augmente de manière telle qu'il gélifie de manière irréversible.

Le refroidissement du milieu de réaction est essentiel. Il doit être efficace et homogène en maintenant une température suffisamment basse pour ne pas obtenir de viscosification du milieu préjudiciable à l'obtention d'une dispersion aqueuse.

Le problème que se propose de résoudre l'invention est de réduire le temps de préparation des dispersions aqueuses de polymère hydrophile.

La Demanderesse a découvert que, de manière surprenante et totalement inattendue, le problème est résolu en réalisant la polymérisation à faible pression ou sous vide, et plus précisément à une pression inférieure à 200 mbars, et préférentiellement sous vide.

L'expression « sous vide » correspond à une pression très inférieure à la pression atmosphérique, généralement une pression dite « industrielle », c'est-à-dire réalisable de manière industrielle par des pompes à vides primaires, voire secondaire.

La demanderesse a également découvert que le temps de polymérisation est réduit de manière très significative lorsque le milieu aqueux réactionnel est en ébullition lors de la polymérisation.

Sans être lié à une théorie particulière, il semble que l'évacuation de la chaleur lors de l'ébullition permet un refroidissement plus efficace et homogène du milieu, permettant ainsi d'accélérer la polymérisation. La demanderesse a également constaté que toute condition égale par ailleurs, ce nouveau procédé permet d'augmenter la concentration en polymère dans la dispersion.

La présente invention a pour objet un procédé de préparation de dispersion aqueuse de polymères hydrophiles par polymérisation, dans lequel la polymérisation est partiellement ou totalement réalisée à une pression inférieure à 200 mbars.

Plus précisément l'invention a pour objet un procédé de préparation d'une dispersion aqueuse de polymères hydrophiles selon lequel, dans un réacteur :
- on prépare un milieu réactionnel sous la forme d'une solution aqueuse comprenant des monomères hydrosolubles au moins, un ou plusieurs sels et/ou un ou plusieurs polymères organiques dispersants;
- on polymérise les monomères,
- on décharge le polymère obtenu du réacteur.

Selon ce procédé, on abaisse la pression du milieu réactionnel à une valeur inférieure à 200 mbars, de préférence une pression comprise entre 1 et 100 mbars, avantageusement à une pression telle que le milieu réactionnel est en ébullition.

Cette diminution de la pression peut être effectuée à divers moment du procédé selon les modalités mentionnées ensuite à titre d'exemple. En d'autres termes, la diminution de pression peut être appliquée pendant toute ou partie de la durée de la préparation de la dispersion.
En pratique, on prépare le milieu réactionnel à pression atmosphérique, et on abaisse la pression dudit milieu réactionnel à une valeur au moins inférieure à 200 mbars pendant toute ou partie de la durée de la polymérisation.

Selon un mode préféré, le milieu aqueux réactionnel est en ébullition lors de tout ou partie de la polymérisation.

Dans un mode de réalisation préféré, la pression du milieu réactionnel a une valeur comprise entre 0.1 mbars 100 mbars, préférentiellement entre 1 mbars et 60 mbars.

Par polymère hydrophile, on entend les polymères hydrosolubles, les polymères hydrogonflants et les polymères hydrophiles pouvant comporter des chaînes hydrophobes.

Des étapes supplémentaires de dégazage à l'azote, de chauffage à la température de réaction peuvent s'ajouter aux étapes précédemment décrites.

A la fin de la polymérisation, le réacteur est remis à pression atmosphérique pour le déchargement de la dispersion. Il est également possible de maintenir une pression inférieure à 200 mbars, lors du déchargement et pendant le stockage de la dispersion. Dans ces conditions, le contenant est maintenu sous faible pression ce qui permet en outre d'améliorer la stabilité de la dispersion.

Pendant l'ébullition, une quantité d'eau s'évapore permettant ainsi une diffusion de la chaleur de la réaction, et par conséquent un refroidissement plus efficace du milieu réactionnel. Cela permet également d'obtenir un avantage secondaire qui est de concentrer la solution en polymère.

La température de polymérisation est généralement comprise entre 10 et 80°C, préférentiellement comprise entre 15 et 50°C, et encore plus préférentiellement comprise entre 20 et 40°C. La viscosité du milieu réactionnel reste faible grâce à la faible pression et à une température mieux maîtrisée et plus homogène dans tout le milieu que ce soit près des parois du réacteur, ou au centre du bain réactionnel.

Les moyens pour abaisser la pression sont tous les moyens connus sans que cela soit limitatif. On peut citer par exemple les pompes à vide à membrane, à palette, ou à piston.

La polymérisation s'effectue dans un réacteur étanche capable de maintenir la faible pression nécessaire au procédé.

La polymérisation est généralement initiée après la mise en sous pression du réacteur, mais peut également être initiée avant ou pendant l'étape d'abaissement de la pression. L'étape de mise en sous pression dure généralement quelques secondes, voire quelques minutes, selon le volume du réacteur, et selon le matériel utilisé pour effectuer le vide.

Dès lors et selon un mode de réalisation particulier, successivement :
- on prépare le milieu réactionnel à pression atmosphérique,
- on abaisse la pression dudit milieu réactionnel
- on initie la polymérisation.

Dans un autre mode de réalisation, successivement :
- on prépare le milieu réactionnel à pression atmosphérique,
- simultanément, on abaisse la pression dudit milieu réactionnel et on initie la polymérisation.

Dans un autre mode de réalisation, successivement :
- on prépare le milieu réactionnel à pression atmosphérique,
- on initie la polymérisation,
- on abaisse la pression dudit milieu réactionnel pendant la polymérisation.

Les sels organiques ou inorganiques permettant l'insolubilisation du polymère préparé dans la phase aqueuse peuvent être ajoutés en une fois ou en plusieurs fois. Généralement on effectue un premier ajout dans la solution aqueuse avant le début de la polymérisation. Dans le cas d'ajout multiple, les ajouts complémentaires de sels peuvent être effectués soit en cassant le vide et en remontant à la pression atmosphérique, soit de manière préférentielle par ajout de sels sous vide, le contenant des sels étant lui-même sous vide, ledit vide étant proche de celui du milieu réactionnel. L'intérêt d'un ajout progressif de sels est de favoriser une précipitation progressive du polymère formé et une meilleure stabilisation dudit polymère dans la phase aqueuse. On peut agir de la même manière lorsqu'il s'agit d'ajouter des monomères, des dispersants, ou d'autres composés.

La solution aqueuse comprend des monomères hydrosolubles ayant une double liaison éthylénique choisis parmi les familles suivantes :
- Les monomères anioniques. Ils sont avantageusement choisis dans le groupe comprenant les monomères possédant une fonction carboxylique (ex: acide acrylique, acide methacrylique, et leurs sels...), les monomères possédant une fonction acide sulfonique (ex: acide 2-acrylamido- 2-méthylpropane sulfonique (AMPS) et leurs sels...).
- Les monomères non ioniques. Ils sont avantageusement choisis dans le groupe comprenant l'acrylamide et le méthacrylamide, les dérivés de l'acrylamide comme les N-alkylacrylamide par exemple le N-isopropylacrylamide, le N-tert- butylacrylamide, ainsi que les N,N-dialkylacrylamides comme le NN-diméthylacrylamide et le N-méthylolacrylamide. Egalement peuvent être utilisés la vinylformamide, la N-vinylpyridine, la N- vinylpyrrolidone, les hydroxyalkyl acrylates et méthacrylates, les (méth) acrylates portant des chaînes du type alkoxy. Les monomères non ioniques préférés sont l'acrylamide, NN-diméthylacrylamide, la N- vinylpyrrolidone.
- Les monomères cationiques. Ils sont de préférence choisis dans le groupe comprenant les sels de diallyldialkyl ammonium comme le chlorure de diallyl dimethyl ammonium (DADMAC) et encore les acrylates et methacrylates de dialkylaminoalkyle, en particulier l'acrylate de dialkylaminoéthyle (ADAME) et le méthacrylate de dialkylaminoéthyle (MADAME), ainsi que leurs formes acidifiés ou quaternisés par les moyens connus de l'homme de métier, et encore les dialkyl-aminoalkylacrylamides ou -methacrylamides, ainsi que leurs formes acidifiés ou quaternisés de manière connue, par exemple le (meth)acrylamido-propyl triméthyl ammonium chlorure.
- Les monomères de type zwitterioniques peuvent également être utilisés; ils associent à la fois les charges anioniques et cationiques sur un seul et même momomère. A titre d'exemples de monomères zwitterioniques, on peut mentionner : les monomères sulfobétaïnes comme le sulfopropyl diméthylammonium éthyl méthacrylate, le sulfopropyl diméthylammonium propylméthacrylamide, le sulfopropyl 2-vinylpyridinium, les monomères phosphobétaïnes, comme le phosphato éthyl triméthylammonium éthyl méthacrylate les monomères carboxybétaïnes.

Sans sortir du cadre de l'invention, en association avec ces monomères, d'autres monomères peuvent également être utilisés, notamment des monomères hydrophobes ou hydrophile à caractère hydrophobe: on citera à titre d'exemple le styrène, les alkyl (meth)acrylates, les aryles (meth) acrylates, les dérivés hydrophobes d'acrylamide. Les polymères obtenus par le procédé selon l'invention sont linéaires, ramifiés, peigne ou réticulés ou de toute autre structure connue. Préférentiellement les polymères sont linéaires ou branchés.

Une manière d'obtenir un polymère ramifié ou réticulé consiste à utiliser un agent de ramification/réticulation durant ou après la polymérisation, en association ou non avec un agent de transfert. De façon non limitative, les agents de ramification/réticulation que l'on peut utiliser comprennent des agents de type ionique, comme les sels de métal polyvalent, le formaldéhyde, le glyoxal, ou encore, et de préférence, des agents de type covalent qui vont copolymériser avec les monomères et de préférence des monomères à insaturation polyéthylénique (ayant au minimum deux fonctions insaturées), comme par exemple les fonctions vinyliques, allyliques, acryliques et époxy (comme par exemple le méthylène bis acrylamide (MBA) ). En pratique, l'agent de ramification est introduit à raison de cinq à mille (5 à 1000) moles par million de moles de monomères, de préférence 5 à 200.

On trouvera ci-après une liste non limitative des agents de transfert: alcool isopropylique, hypophosphite de sodium, mercaptoethanol.

La concentration en monomère dans la solution aqueuse est généralement comprise entre 5 et 50% en poids, préférentiellement entre 15 et 35% en poids.

Les polymères obtenus par le procédé sont des (co)polymères anioniques, cationiques, non ioniques, amphotères, solubles dans l'eau ou gonflant dans l'eau lorsqu'ils sont branchés ou réticulés.

Tout sel organique ou inorganique permettant l'insolubilisation du polymère préparé est utilisable selon l'invention. Des sels préférés sont ceux comportant les anions sulfate, dihydrogénophosphate, phosphate et halogénures. Les cations correspondants peuvent être le sodium, le potassium, l'ammonium, le magnésium, l'aluminium. L'utilisation simultanée de deux ou plus de ces sels est également possible.

Lorsque le sel est présent, la concentration en sels dans la solution aqueuse correspond au maximum à la solubilité maximum en sel, préférentiellement entre 5 et 35% en poids, et encore plus préférentiellement entre 8 et 27% en poids.

Le polymère organique dispersant ou stabilisant est généralement un polymère de poids moléculaire compris entre 1.000 et 500.000 g/mol. Il peut être choisi parmi les (co)polymère anionique, cationique ou amphotère obtenus à partir des monomères non ioniques, anioniques et/ou cationiques précédemment cités. De manière générale, les polymères stabilisants de l'invention sont de poids moléculaire inférieur à celui du polymère principal, et préférentiellement compris entre 10.000 et 300.000 g/mol.

Les polymères stabilisants particulièrement préférés sont des (co) polymères anioniques, amphotères obtenus à partir de l'acide 2-acrylamido2-méthyl-1-propane sulfonique (AMPS) ou de ses sels ou de l'acide (méth) acrylique ou de ses sels et les copolymères obtenus à partir de ces monomères.

On pourra également utilisé comme polymère stabilisant, les (co)polymères à base de sels de diallyldialkyl ammonium comme le chlorure de diallyl dimethyl ammonium (DADMAC), les acrylates et methacrylates de dialkylaminoalkyle, en particulier l'acrylate de dialkylaminoéthyle (ADAME) et le méthacrylate de dialkylaminoéthyle (MADAME), ainsi que leurs formes acidifiés ou quaternisés par les moyens connus de l'homme de métier, les dialkyl-aminoalkylacrylamides ou -methacrylamides, ainsi que leurs formes acidifiés ou quaternisés de manière connue, par exemple le (meth)acrylamido-propyl triméthyl ammonium chlorure.

La concentration en polymère organique dispersant ou stabilisant dans la solution aqueuse, lorsqu'il est présent, est généralement inférieure à 30% en poids, préférentiellement comprise entre 5 et 20% en poids.

Certains additifs connus par l'homme du métier peuvent également être utilisés. On citera les alcools polyfonctionnels comme le glycérol, le polyéthylèneglycol, et le polypropylèneglycol. Les éthers de polyalkylène peuvent également être utilisés.

La concentration en l'un de ces additifs comme les alcools polyfonctionnels dans la phase aqueuse est généralement comprise entre 0 et 20% en poids, préférentiellement entre 0 et 10% en poids. L'utilisation d'un stabilisant unique ou d'un mélange de stabilisants est également possible.

L'utilisation de un ou plusieurs sels associés à un ou plusieurs polymères organiques dispersant, et éventuellement associés avec un autre additif du type alcools polyfonctionnels, est également possible et généralement préférée pour obtenir des dispersions aqueuses de bonne stabilité.

La polymérisation est initiée par tout moyen connu de l'homme de l'art. On peut citer notamment les couples oxydant réducteur, les composés azoïques, les rayonnements lumineux comme les Ultra-Violet.

L'homme de métier saura choisir la meilleure combinaison en fonction de ses connaissances propres et de la présente description.

Les polymères obtenus par le procédé selon l'invention ont un poids moléculaires compris entre 100 000 et 30 000 000 g/mol, préférentiellement inférieur à 20 000 000 g/mol.
La présente invention a également pour objet l'utilisation des dispersions aqueuses de polymère hydrophile obtenues par le procédé selon l'invention dans les industries suivantes : l'industrie du papier (comme agent rétention secondaire, agent d'égouttage...), le traitement des eaux (potables ou usées), de manière générale toutes les techniques de coagulation ou floculation, l'industrie minière, l'industrie du pétrole (récupération assistée du pétrole, diminution de pertes de charges ou réduction de friction ), l'industrie des produits cosmétiques, l'industrie textile, l'industrie des produits détergents, et toutes applications analogues qui seront évidentes pour l'homme de métier. D'autres caractéristiques et avantages de l'invention apparaîtront mieux à la lecture de la description et des exemples non limitatifs qui vont suivre.

L'invention et les avantages qui en découlent ressortiront des exemples suivants.

### Exemple 1

105 g d'une solution aqueuse à 12% d'un dispersant copolymère d'acide acrylique et d'ATBS, 195.2 g d'une solution aqueuse à 50% d'acrylamide, 42.4 g d'acide acrylique, 98 g de sulfate d'ammonium, 10.5 g of glycérine, 4.2 g d'une solution de NaOH à 50%, 1 g d'une solution aqueuse à 50 g/L de bromate de sodium, 0.7 g de formiate et 213.3 g d'eau sont mélangés puis dégazés avec de l'azote, et enfin chauffés à 35°C sous agitation. Le pH de la solution est fixé à 3,6. La pression à l'intérieur du réacteur est abaissée jusqu'à atteindre 43 mbar. 12 g de métabisulfite de sodium sont ensuite ajoutés lentement pendant toute la durée de la polymérisation. La chaleur dégagée par la réaction de polymérisation étant absorbée par l'évaporation d'environ 87 g d'eau, la réaction a pu être terminée en 2h30. C'est l'essai D.

D'autres essais A, B et C ont été réalisée. Les résultats sont consignés dans le tableau 1.

L'essai A correspond à une polymérisation d'une dispersion eau dans eau telle que cela est fait dans l'art antérieur, i.e. à une pression atmosphérique et pendant un temps long, 10 heures.

Dans l'essai B, la demanderesse a tenté d'accélérer la réaction en conservant la pression atmosphérique mais en ajoutant le métabisulfite plus rapidement, de telle manière que cette quantité soit ajoutée régulièrement dans un délai de 2h30. Cela a conduit à un gel lors de la première heure.

Dans l'essai C, la demanderesse a réussi à diminuer significativement le temps de polymérisation à 3h30 en ajustant la pression à 80 mbars.

L'essai D donne les meilleurs résultats avec un temps de polymérisation divisé par 4 par rapport au temps traditionnel de polymérisation.

Les procédés des essais A, C et D conduisent à des dispersions stables.

Ces essais montrent également l'intérêt du procédé selon l'invention puisqu'il permet également d'augmenter la concentration en polymère dans la dispersion. Cette augmentation est significative puisqu'elle correspond à 14% d'augmentation de concentration.

**Tableau 1**

| Essai | Pression | Temps de polymérisation | Etat du produit final | Concentration en polymère |
|---|---|---|---|---|
| A | 1 bar | 10 h | Dispersion | 20% |
| B | 1 bar | N.A. | Gel | N.A. |
| C | 80 mbars | 3 h 30 | Dispersion | 22,8% |
| D | 43 mbars | 2 h 30 | Dispersion | 22.8% |

| | | | | |
|---|---|---|---|---|
| N.A. : non applicable | | | | |

### Exemple 2

64.8 g d'une solution aqueuse à 20% d'un dispersant de copolymère de methacrylate de dimethylaminoéthyl, chlorométhylé (DADMAC) et d'acrylate de diméthylaminoéthyle (ADAME) chlorométhylé, 121.5 g d'une solution aqueuse à 50% d'acrylamide, 42.7 g d'une solution aqueuse à 80% d'acrylate de diméthylaminoéthyle (ADAME) quaternisé, 161 g de sulfate d'ammonium, 4.2 g de glycérine, 1.6 g d'une solution aqueuse à 50 g/L de bromate de sodium, 0.45 g de formiate, 12.6 g d'une solution aqueuse à 80% d'acrylate de diméthylaminoéthyle (ADAME) chlorobenzylé et 251.3 g d'eau sont mélangés puis dégazés avec de l'azote, et sont ensuite chauffés à 35°C sous agitation. Le pH de la solution est compris entre 4 et 5. La pression à l'intérieur du réacteur est abaissé jusqu'à atteindre 41 mbar et 12 g de métabisulfite de sodium sont ajoutés lentement pendant toute la durée de la polymérisation. La chaleur dégagée par la réaction de polymérisation étant absorbée par l'évaporation d'environ 43 g d'eau, la réaction a pu être terminée en 2h30. C'est l'essai H.

D'autres essais E, F et G ont été réalisée. Les résultats sont consignés dans le tableau 2.

L'essai E correspond à une polymérisation d'une dispersion eau dans eau telle que cela est fait dans l'art antérieur, i.e. à une pression atmosphérique et pendant un temps long, 10 heures.

Dans l'essai F, la demanderesse a tenté d'accélérer la réaction en conservant la pression atmosphérique mais en ajoutant le métabisulfite plus rapidement, de telle manière que cette quantité soit ajoutée régulièrement dans un délai de 2h30. Cela a conduit à un gel lors de la première heure.

Dans l'essai G, la demanderesse a réussi à diminuer significativement le temps de polymérisation à 3h15 en ajustant la pression à 77 mbars.

L'essai H donne les meilleurs résultats avec un temps de polymérisation divisé par 4 par rapport au temps traditionnel de polymérisation.

Les procédés des essais E, G et H conduisent à des dispersions stables.

Ces essais montrent également l'intérêt du procédé selon l'invention puisqu'il permet également d'augmenter la concentration en polymère dans la dispersion.

**Tableau 2**

| Essai | Pression | Temps de polymérisation | Etat du produit final | Concentration en polymère |
|---|---|---|---|---|
| E | 1 bar | 10 h | Dispersion | 20% |
| F | 1 bar | N.A. | Gel | N.A. |
| G | 77 mbars | 3 h 15 | Dispersion | 21,3% |
| H | 41 mbars | 2 h 30 | Dispersion | 21.3% |

| | | | | |
|---|---|---|---|---|
| N.A. : non applicable | | | | |

## Revendications

1. Procédé de préparation d'une dispersion aqueuse de polymères hydrophiles selon lequel, dans un réacteur :
- on prépare un milieu réactionnel sous la forme d'une solution aqueuse comprenant des monomères hydrosolubles au moins, un ou plusieurs sels et/ou un ou plusieurs polymères organiques dispersant;
- on polymérise les monomères,
- on décharge le polymère obtenu du réacteur,
**caractérisé en ce qu'**on abaisse la pression du milieu réactionnel à une valeur inférieure à 200 mbars.

2. Procédé selon la revendication 1, **caractérisé en ce qu'**on abaisse la pression du milieu réactionnel à une valeur telle que le milieu réactionnel est en ébullition.

3. Procédé selon la revendication 1, **caractérisé en ce qu'**on abaisse la pression du milieu réactionnel à une valeur comprise entre 0.1 mbars et 100 mbars, préférentiellement entre 1 mbars et 60 mbars.

4. Procédé selon l'une des revendications 1 à 3, **caractérisé en ce qu'**on prépare le milieu réactionnel à pression atmosphérique, et on abaisse la pression dudit milieu réactionnel pendant toute ou partie de la durée de la polymérisation.

5. Procédé selon l'une des revendications 1 à 3, **caractérisé en ce que** successivement :
- on prépare le milieu réactionnel à pression atmosphérique,
- on abaisse la pression dudit milieu réactionnel
- on initie la polymérisation.

6. Procédé selon l'une des revendications 1 à 3, **caractérisé en ce que** successivement :
- on prépare le milieu réactionnel à pression atmosphérique,
- simultanément, on abaisse la pression dudit milieu réactionnel et on initie la polymérisation.

7. Procédé selon l'une des revendications 1 à 3, **caractérisé en ce que** successivement :
- on prépare le milieu réactionnel à pression atmosphérique,
- on initie la polymérisation,
- on abaisse la pression dudit milieu réactionnel pendant la polymérisation.

8. Procédé selon l'une des revendications 1 à 7, **caractérisé en ce que** la température de polymérisation est comprise entre 10 et 80°C, préférentiellement comprise entre 20 et 40°C.

9. Procédé selon l'une des revendications 1 à 8, **caractérisé en ce que** les monomères hydrosolubles ont une double liaison éthylénique et sont choisis parmi les familles suivantes :
- Les monomères anioniques choisis dans le groupe comprenant les monomères possédant une fonction carboxylique, les monomères possédant une fonction acide sulfonique et leurs sels...).
- Les monomères non ioniques choisis dans le groupe comprenant l'acrylamide et le méthacrylamide, les dérivés de l'acrylamide la vinylformamide, la N-vinylpyridine, la N- vinylpyrrolidone, les hydroxyalkyl acrylates et méthacrylates, les (méth) acrylates portant des chaînes du type alkoxy.
- Les monomères cationiques choisis dans le groupe comprenant les sels de diallyldialkyl ammonium, les acrylates et methacrylates de dialkylaminoalkyle, ainsi que leurs formes acidifiés ou quaternisés, les dialkyl-aminoalkylacrylamides ou - methacrylamides, ainsi que leurs formes acidifiés ou quatemisés.

10. Procédé selon l'une des revendications 1 à 9, **caractérisé en ce que** la concentration en monomère dans la solution aqueuse est généralement comprise entre 5 et 50% en poids, préférentiellement entre 15 et 35% en poids.

11. Procédé selon l'une des revendications 1 à 10, **caractérisé en ce que** le ou les sels sont choisis parmi ceux comportant les anions sulfate, dihydrogénophosphate, phosphate et halogénures, et comportant comme cations correspondants le sodium, le potassium, l'ammonium, le magnésium, l'aluminium.

12. Procédé selon l'une des revendications 1 à 11, **caractérisé en ce que** la concentration en sels dans la solution aqueuse correspond au maximum à la solubilité maximum en sel, préférentiellement entre 5 et 35% en poids, et encore plus préférentiellement entre 8 et 27% en poids.

13. Procédé selon l'une des revendications 1 à 12, **caractérisé en ce que** le ou les polymères organiques dispersants sont des polymères de poids moléculaire compris entre 1.000 et 500.000 g/mol.

14. Procédé selon l'une des revendications 1 à 13, **caractérisé en ce que** la concentration en polymère organique dispersant dans la phase aqueuse est généralement inférieure à 30% en poids, préférentiellement comprise entre 5 et 20% en poids.

## Patentansprüche

1. Verfahren zur Herstellung einer wässrigen Dispersion aus hydrophilen Polymeren, nach dem in einem Reaktionsgefäß:
- ein Reaktionsmedium in Form einer wässrigen Lösung zubereitet wird, die zumindest wasserlösliche Monomere, ein oder mehrere Salz/e und/oder ein oder mehrere dispergierende/s organische/s Polymer/e umfasst;
- die Monomere polymerisiert werden;
- das erhaltene Polymer aus dem Reaktionsgefäß ausgeleitet wird,
**dadurch gekennzeichnet, dass** der Druck des Reaktionsmediums auf einen Wert unter 200 mbar abgesenkt wird.

2. Verfahren nach Anspruch 1, **dadurch gekennzeichnet, dass** der Druck des Reaktionsmediums auf einen solchen Wert abgesenkt wird, dass das Reaktionsmedium siedet.

3. Verfahren nach Anspruch 1, **dadurch gekennzeichnet, dass** der Druck des Reaktionsmediums auf einen Wert zwischen 0,1 mbar und 100 mbar, vorzugsweise zwischen 1 mbar und 60 mbar abgesenkt wird.

4. Verfahren nach einem der Ansprüche 1 bis 3, **dadurch gekennzeichnet, dass** das Reaktionsmedium bei Atmosphärendruck zubereitet wird und der Druck des Reaktionsmediums während der gesamten oder einem Teil der Dauer der Polymerisierung abgesenkt wird.

5. Verfahren nach einem der Ansprüche 1 bis 4, **dadurch gekennzeichnet, dass** sukzessive:
- das Reaktionsmedium bei Atmosphärendruck zubereitet wird,
- der Druck des Reaktionsmediums abgesenkt wird,
- die Polymerisierung eingeleitet wird.

6. Verfahren nach einem der Ansprüche 1 bis 3, **dadurch gekennzeichnet, dass** sukzessive:
- das Reaktionsmedium bei Atmosphärendruck zubereitet wird,
- gleichzeitig der Druck des Reaktionsmediums abgesenkt und die Polymerisierung eingeleitet wird.

7. Verfahren nach einem der Ansprüche 1 bis 3, **dadurch gekennzeichnet, dass** sukzessive:
- das Reaktionsmedium bei Atmosphärendruck zubereitet wird,
- die Polymerisierung eingeleitet wird,
- der Druck des Reaktionsmediums während der Polymerisierung abgesenkt wird.

8. Verfahren nach einem der Ansprüche 1 bis 7, **dadurch gekennzeichnet, dass** die Polymerisierungstemperatur zwischen 10 und 80°C, vorzugsweise zwischen 20 und 40°C beträgt.

9. Verfahren nach einem der Ansprüche 1 bis 8, **dadurch gekennzeichnet, dass** die wasserlöslichen Monomere eine Ethylendoppelbindung haben und aus den folgenden Familien ausgewählt sind:
- Anionischen Monomeren, die aus der Gruppe ausgewählt sind, die Monomere, die eine Carboxylfunktion besitzen, Monomere, die eine Sulfonsäurefunktion besitzen, und deren Salze usw. umfasst.
- Nichtionischen Monomeren, die aus der Gruppe ausgewählt sind, die Acrylamid und Methacrylamid, Derivate von Acrylamid, Vinylformamid, N-Vinylpyridin, N-Vinylpyrrolidon, Hydroxyalkylacrylate und -methacrylate, (Meth)acrylate, die Ketten des Typs Alkoxy tragen, umfassen.
- Kationischen Monomeren, die aus der Gruppe ausgewählt sind, die Diallyldialkylammoniumsalze, Dialkylaminoalkylacrylate und -methacrylate, sowie deren in saure oder quartäre Zustände überführten Formen, Dialkylaminoalkylacrylamide oder -methacrylamide sowie deren in saure oder quartäre Zustände überführten Formen umfasst.

10. Verfahren nach einem der Ansprüche 1 bis 9, **dadurch gekennzeichnet, dass** die Konzentration an Monomer in der wässrigen Lösung allgemein zwischen 5 und 50 Gew.-%, bevorzugt zwischen 15 und 35 Gew.-% beträgt.

11. Verfahren nach einem der Ansprüche 1 bis 10, **dadurch gekennzeichnet, dass** das oder die Salz/e aus denjenigen ausgewählt ist/sind, die Sulfat-, Dihydrogenphosphat-, Phosphat- und Halogenidanionen umfassen und als entsprechende Kationen Natrium, Kalium, Ammonium, Magnesium, Aluminium umfassen.

12. Verfahren nach einem der Ansprüche 1 bis 11, **dadurch gekennzeichnet, dass** die Konzentration an Salzen in der wässrigen Lösung dem Maximum der maximalen Löslichkeit an Salz entspricht, bevorzugt zwischen 5 und 35 Gew.-% und noch bevorzugter zwischen 8 und 27 Gew.-% liegt.

13. Verfahren nach einem der Ansprüche 1 bis 12, **dadurch gekennzeichnet, dass** es sich bei dem oder den dispergierenden organischen Polymer/en um Polymere mit einem Molekulargewicht handelt, das zwischen 1.000 und 500.000 g/mol beträgt.

14. Verfahren nach einem der Ansprüche 1 bis 13, **dadurch gekennzeichnet, dass** die Konzentration an dispergierendem organischem Polymer in der wässrigen Phase allgemein unter 30 Gew.-%, bevorzugt zwischen 5 und 20 Gew.-% beträgt.

## Claims

1. A process for preparing an aqueous dispersion of hydrophilic polymers, according to which, in a reactor:
- a reaction medium is prepared in the form of an aqueous solution comprising at least water-soluble monomers, one or more salts and/or one or more dispersing organic polymers;
- the monomers are polymerized;
- the polymer obtained is discharged from the reactor;
**characterized in that** the pressure of the reaction medium is lowered to a value below 200 mbar.

2. The process as claimed in claim 1, **characterized in that** the pressure of the reaction medium is lowered to a value such that the reaction medium boils.

3. The process as claimed in claim 1, **characterized in that** the pressure of the reaction medium is lowered to a value of between 0.1 mbar and 100 mbar and preferentially between 1 mbar and 60 mbar.

4. The process as claimed in one of claims 1 to 3, **characterized in that** the reaction medium is prepared at atmospheric pressure, and the pressure of said reaction medium is lowered throughout all or part of the duration of the polymerization.

5. The process as claimed in one of claims 1 to 3, **characterized in that** the following are successively performed:
- the reaction medium is prepared at atmospheric pressure,
- the pressure of said reaction medium is lowered,
- the polymerization is initiated.

6. The process as claimed in one of claims 1 to 3, **characterized in that** the following are successively performed:
- the reaction medium is prepared at atmospheric pressure,
- simultaneously, the pressure of said reaction medium is lowered and the polymerization is initiated.

7. The process as claimed in one of claims 1 to 3, **characterized in that** the following are successively performed:
- the reaction medium is prepared at atmospheric pressure,
- the polymerization is initiated,
- the pressure of said reaction medium is lowered throughout the polymerization.

8. The process as claimed in one of claims 1 to 7, **characterized in that** the polymerization temperature is between 10 and 80°C and preferentially between 20 and 40°C.

9. The process as claimed in one of claims 1 to 8, **characterized in that** the water-soluble monomers contain an ethylenic double bond and are chosen from the following families:
- Anionic monomers chosen from the group comprising monomers bearing a carboxylic function, monomers bearing a sulfonic acid function, and salts thereof;
- Nonionic monomers chosen from the group comprising acrylamide and methacrylamide, acrylamide derivatives, vinylformamide, N-vinylpyridine, N-vinylpyrrolidone, hydroxyalkyl acrylates and methacrylates, and (meth)acrylates bearing chains of the alkoxy type;
- Cationic polymers chosen from the group comprising diallyldialkylammonium salts, dialkylaminoalkyl acrylates and methacrylates, and also the acidified or quaternized forms thereof, and dialkylaminoalkyl-acrylamides or -methacrylamides, and also the acidified or quaternized forms thereof.

10. The process as claimed in one of claims 1 to 9, **characterized in that** the monomer concentration in the aqueous solution is generally between 5% and 50% by weight and preferentially between 15% and 35% by weight.

11. The process as claimed in one of claims 1 to 10, **characterized in that** the salt(s) are chosen from those comprising sulfate, dihydrogen phosphate, phosphate and halide anions, and comprising sodium, potassium, ammonium, magnesium or aluminum as the corresponding cations.

12. The process as claimed in one of claims 1 to 11, **characterized in that** the salt concentration in the aqueous solution corresponds at most to the maximum salt solubility, preferentially between 5% and 35% by weight and even more preferentially between 8% and 27% by weight.

13. The process as claimed in one of claims 1 to 12, **characterized in that** the dispersing organic polymer(s) are polymers with a molecular weight of between 1000 and 500 000 g/mol.

14. The process as claimed in one of claims 1 to 13, **characterized in that** the concentration of dispersing organic polymer in the aqueous phase is generally less than 30% by weight and preferentially between 5% and 20% by weight.
